Europäisches Patentamt

**European Patent Office**

**Office européen des brevets**

(19)

(11) Publication number: **0 266 862**
**A1**

# EUROPEAN PATENT APPLICATION

(21) Application number: **87306933.0**

(22) Date of filing: **05.08.87**

(51) Int. Cl.⁴: **H02K 1/16 , H02K 1/26 ,
H02K 29/00**

(30) Priority: **11.08.86 US 895673**

(43) Date of publication of application:
**11.05.88 Bulletin 88/19**

(84) Designated Contracting States:
**AT BE CH DE ES FR GB GR IT LI LU NL SE**

(71) Applicant: **MAGHEMITE INC.**
**2275 Speakman Drive Unit 2**
**Mississauga Ontario L5K 1B1(CA)**

(72) Inventor: **Whiteley, Eric**
**61 Weller Street**
**Peterborough Ontario K9J 4W8(CA)**

(74) Representative: **Muir, Ian R. et al**
**HASELTINE LAKE & CO. Hazlitt House 28**
**Southampton Buildings Chancery Lane**
**London WC2A 1AT(GB)**

(54) **Improved brushless D.C. dynamoelectric machine.**

(57) A dynamoelectric machine which may operate in a motor mode or a generator mode is described wherein substantially the entire magnetic circuit is provided by ferrite material. In one particular embodiment, hard ferrite permanent magnet segments (30) are mounted on a rotor (20) plate while soft ferrite magnet segments (22, 24, 26) with electrical coil windings (30) mounted thereon are provided in a stator (18) spaced apart from the rotor by an air gap. Other embodiments of the concept are described. Provision is made for decreasing mechanical vibration and audible noise by decreasing the magnitude of pulsations of air gap flux.

FIG.1.

EP 0 266 862 A1

## IMPROVED BRUSHLESS D.C. DYNAMOELECTRIC MACHINE

The present invention relates to an improved dynamoelectric machine.

In our prior U.S. Patent No. 4,605,874, we have described a novel brushless D.C. dynamoelectric machine which comprises a disc-like rotor element comprising hard ferrite toroid means providing a plurality of magnetic poles of alternating polarity and mounted for rotation about its axis and a disc-like stator element comprising soft ferrite toroid means and mounted coaxially with and spaced apart from the rotor element to define an air gap therebetween. The soft ferrite toroid means is formed with radially-directed coil winding-receiving slots and electrical coil windings are mounted to the stator in the slots.

As illustrated in our earlier patent, the radially-directed coil winding-receiving slots are provided in an evenly circumferentially-spaced array. Slot alignment between the stator slots and slots defining the magnet poles on the rotor results in a variation in the air gap magnetic flux, which becomes substantial upon the alignment of, typically, six rotor slots with six of the stator slots. The pulsation in the air gap flux results in mechanical vibration in the motor and audible noise, which are both undesirable in some applications.

In accordance with the present invention, the magnitude of the pulsations of air gap flux is during rotation of the rotor with respect to the stator is decreased by a variety of means. By decreasing the magnitude of the air gap flux pulsations, the mechanical vibration associated therewith is decreased.

The present invention, therefore, provides a brushless D.C. dynamoelectric machine, which comprises a disc-like rotor element comprising hard ferrite toroid means providing a plurality of magnetic poles of alternating polarity and mounted for rotation about its axis, a disc-like stator element comprising soft ferrite toroid means and mounted coaxially with and spaced apart from the rotor element to define an air gap therebetween, the soft ferrite toroid means being formed with radially-directed coil winding-receiving slots, and electrical coil windings mounted to the stator in the slots, characterized by means for decreasing the magnitude of pulsations of air gap flux during rotation of the rotor with respect to the stator.

The decrease in air gap flux provided by the present invention may be effected in any desired manner. One manner of achieving this result is to locate the stator slots unevenly angularly spaced with respect to each other. Another manner of achieving the result is to decrease the cross-sectional dimension of the stator slots at the air gap face thereof. In one preferred embodiment, the stator slots are closed at the air gap face.

In addition, the rotor slots defined by the circumferential gap between rotor toroidal segments may be slightly skewed with respect to the radial direction of the toroid, to decrease the air gap flux.

In the present invention, the soft ferrite toroid means may be formed as a unitary structure having slots therein receiving the electrical coil windings. Alternatively, the soft ferrite toroid means is formed as a composite of a first toroid and a second toroid having the slots formed therein assembled to the first toroid.

In one preferred embodiment of the invention, the hard ferrite toroid means may comprise an even number of toroidal segments arranged in a multipolar magnetic circuit with each toroidal segment constituting one pole to provide an axially thin rotor and the soft ferrite toroid means comprises an even number of toroidal segments each spaced apart by one of the slots and mounted on a support disc to provide an axially-thin stator spaced apart from the rotor by the air gap to permit the rotor to turn relative to the stator about a common axis. The hard ferrite toroidal segments may be discrete segments mounted on a disc of magnetizable material. In this arrangement, an even number of the electrical coils is mounted in the slots with each coil enclosing two of the toroidal segments and the number of soft ferrite toroidal segments being in number equal to twice the number of hard ferrite toroidal segments, whereby the coil windings substantially span one rotor pole pitch.

In the dynamoelectric machine of this invention, relative rotation is effected between the permanent magnetic poles of the hard ferrite permanent magnets and the soft ferrite portion and associated windings. Interaction of the moving magnetic flux and the electrical windings produces motor torque when the windings are suitably connected and electrically energized. Alternatively, if a driving force is applied to the rotor, then the windings produce an output of electrical energy and the device acts as an electrical generator.

The term "ferrite" is widely used and understood in the field of magnetic materials, to designate a particular class of magnetic materials, generally chemically depicted as $MO.Fe_2O_3$ where MO represents a metal oxide of a metal M, which typically is barium, strontium or lead.

The terms "hard" and "soft", as used herein to describe the ferrite material, are directed to the magnetic properties of the ferrite material rather than to the mechanical properties. The "hard ferrite" material is so compounded that, when heavily magnetized, a residual magnetism is retained and thereby the material becomes a permanent magnet. The "soft ferrite" material is compounded and processed to possess a high magnetic permeability and a very low residual magnetism after exposure to magnetic flux. Mechanically, both ferrites are ceramic in nature, i.e. they are hard, difficult to machine and somewhat brittle.

The invention is described further, by way of illustration, with reference to the accompanying drawings, in which:

Figure I is a perspective view of a brushless dynamoelectric machine constructed generally in accordance with the present invention;

Figure 2 is an exploded perspective view of the dynamoelectric machine of Figure I but illustrating the component parts of a machine constructed in accordance with our U.S. Patent No. 4,605,874;

Figures 3A to 3G are close-up views of the rotor and stator of a dynamoelectric machine at various stages of a torque-producing cycle;

Figure 4 is a plan view of a stator toroid constructed in accordance with the invention; and

Figures 5A to 5G show various configurations for the winding-receiving slots in the stator toroid.

Referring to Figure I, a brushless dynamoelectric machine 10 in accordance with one embodiment of the invention comprises a pair of housing members 12 and 14 which are bolted together by bolts 16 or otherwise joined to provide a hollow housing enclosing a stator 18 and a rotor 20.

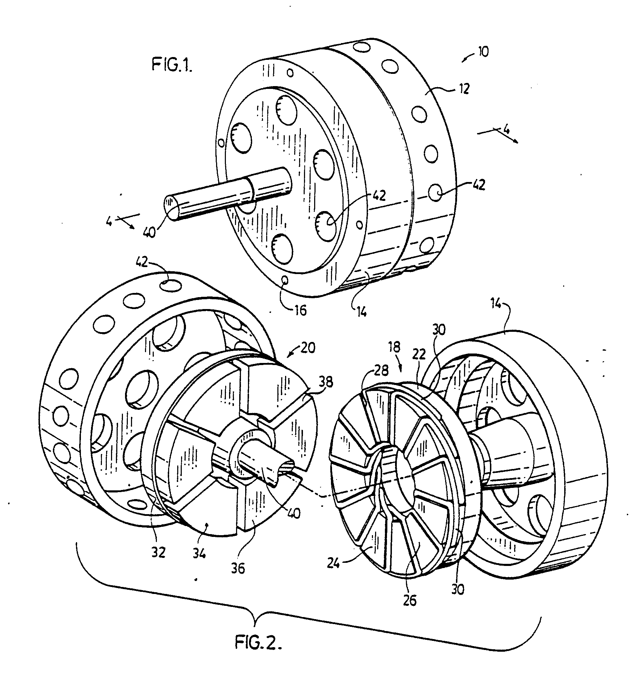

For the purpose of illustrating the construction and operation of a dynamoelectric machine in accordance with the invention, reference is made to Figure 2, which shows a stator and rotor arrangement in accordance with our prior U.S. Patent No. 4,605,874.

Both the stator 18 and the rotor 20 take the form of relatively thin discs which are mounted coaxially and spaced apart a short distance. The stator 18, which is fixedly mounted to the housing member 14, comprises two superimposed soft ferrite toroids 22 and 24 joined in face abutting relationship. The soft ferrite toroid 24 is formed into a plurality of segments 26 by slots 28 formed through the thickness of the toroid 24. Two superimposed soft ferrite toroids are used in the illustrated embodiment for ease of construction. If desired, however, a single soft ferrite toroid may be employed with the slots 28 formed to an appropriate depth in the surface thereof.

A plurality of electrical winding coils 30 is mounted in slots 28 in the soft ferrite segments 26. As may be seen in Figure 2, each of the coils 30 is mounted in a first of the slots 28 and in the next-but-one slot 28, and the area located within the periphery of each coil is one pole, thereby establishing a two-phase operation in which the phases are arcuately spaced. The coils 30 of each phase are connected in series, or may be connected in parallel circuits each with coils in series.

The rotor 20 comprises a support plate 32, which may be constructed of steel or other ferromagnetic material, on which is mounted a toroid 34 of hard ferrite permanently magnetic material divided into segments 36 by the provision of slots 38, each segment providing a magnetic pole. The rotor 20 has a shaft 40 on which the rotor 20 is fixedly mounted and which extends through a bearing in the housing member 14 for rotation relative to the stator 18 spaced apart from the stator 18 a short distance. The shaft 40 provides the mechanical power output, if the dynamoelectric machine 10 operates as a motor, or the mechanical power input, if the dynamoelectric machine 10 acts as a generator.

For ease of construction and operation, it is preferred to employ hard ferrite permanent magnet segments 36 in the magnetic circuit. It is possible, however, to employ soft ferrite segments with appropriately-energized coils to produce the magnet poles on the rotor.

In the illustrated arrangement, six hard ferrite magnet segments 36 are provided for twelve soft ferrite segments 26 with the coils 30 being mounted for two-phase operation. Other combinations, however, are possible, for example, four hard ferrite segments 36 in combination with eight soft ferrite segments 26. For two-phase operation, the number of soft ferrite segments 26 and the number of coils 30 is twice the number of hard ferrite permanent magnet segments 36. For three-phase operation, the number of soft ferrite segments 26 and the number of coils 30 is three times the number of hard ferrite permanent magnet segments 36, i.e. eighteen in the illustrated embodiment of six hard ferrite segments.

In the motor mode of the operation of the dynamoelectric machine 10, a two-phase D.C. current is passed through the coils 30 to produce a magnetic field, interaction of that magnetic field with the magnetic field produced by the hard ferrite magnets 36 causes rotation of the rotor 20 and consequently the shaft 40, thereby to provide a mechanical power output. Similarly, when the dynamoelectric machine 10 operates in the gener-

ator mode torque is applied to the shaft 40, so that the rotation of the hard ferrite magnetic field induces the provision of an alternating current output from the coils 30.

The housing members 12 and 14 are provided with openings 42 which act as air holes to cool the interior of the dynamoelectric machine 10.

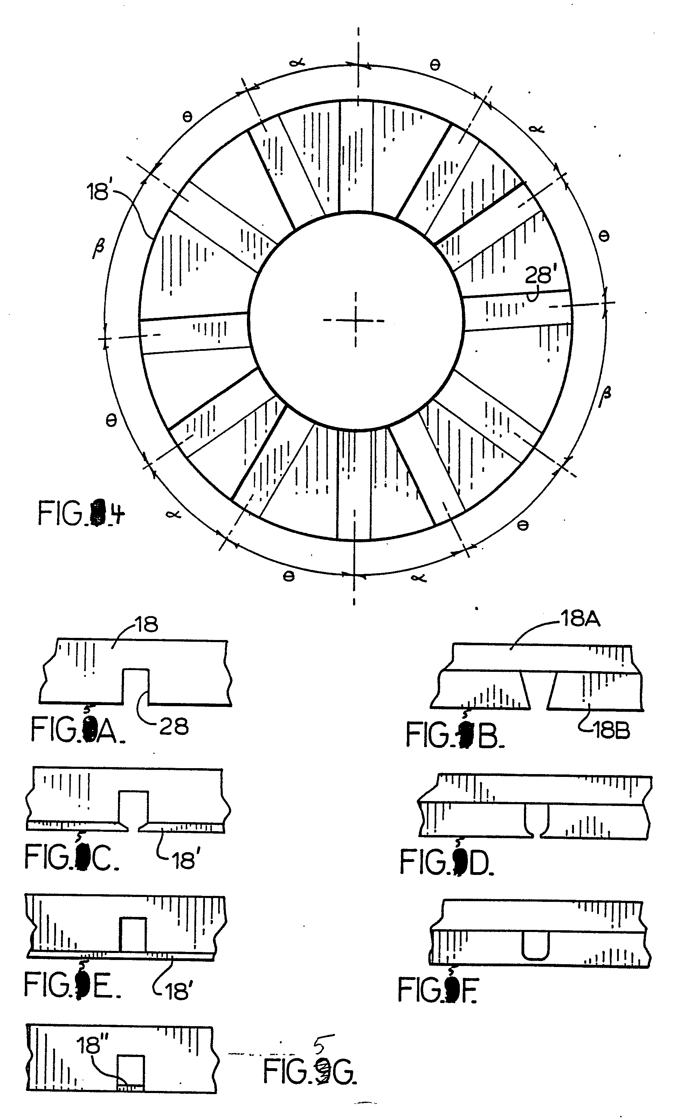

As noted earlier, the regular nature of the array of stator slots 28 and rotor slots 38 results in pulsation of the air gap magnet flux, which in turn results in mechanical vibration and audible noise. In accordance with one embodiment of the invention, as shown in Figure 4, the stator toroid 18' has winding-receiving slots 28' unevenly circumferentially spaced.

As seen in Figure 4, three differing angular spacings are employed in the illustrated embodiment, although any desired number may be employed. The uneven angular spacing is intended to decrease the incidence of coincident alignments of rotor toroid gaps 38 with stator slots 28' when relative rotation occurs.

By providing uneven angular spacing of the slots 28', the number of possible rotor and stator slot alignments can be decreased substantially, thereby decreasing the air gap flux pulsations and attendant vibration and audible noise. In the illustrated embodiment, with angular spacings of the slots 28' $\alpha = 21°$, $\beta = 48°$ and $\gamma = 30°$, the number of rotor and stator slot alignments can be decreased to only two at one time.

Another way of decreasing the air gap pulsation is to decrease the air gap dimension upon slot alignments. Stator slot configurations to achieve this result are shown in cross section in Figures 5B to 5G. Figure 5A is the conventional stator slot configuration of Figure 2.

As seen in Figures 5B, 5D and 5F, the stator 18 may be constructed of two parts, one part 18A being a soft ferrite disc and the other part 18B being soft ferrite segments which are moulded to provide slots 28 of the shape shown when the two parts are assembled. With these arrangements, the coils are first located in the slots in part 18B before part 18B is mounted to part 18A.

As seen in Figures 5C, 5E and 5G, an additional plate 18' or insert 18" may be employed to partially or completely close off the gap provided by the slots 28. The additional plate 18' or insert 18" must be magnetically conducting.

Another improvement which may be effected, again to decrease mechanical vibration and noise caused by air flux variations is to skew the rotor slots 38 with respect to the radial direction shown in Figure 2. A small amount of skew, for example, about a slot width, produces a significant result, since the whole length of the rotor slot thereby never comes into alignment with the rotor slot.

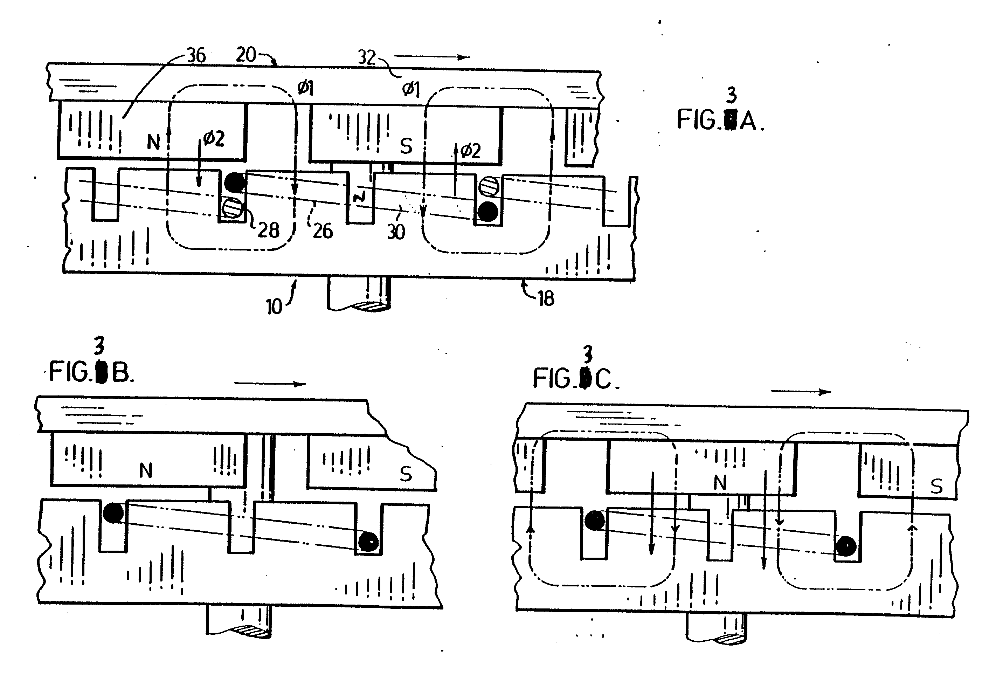

Whichever specific arrangement of stator and rotor is employed, the generation of torque output in the shaft 40 by the dynamoelectric machine 10 when operating in the motor mode is achieved in substantially the same manner, as now described with reference to Figure 3.

Torque is developed by the inherent tendency of a magnetic circuit to adopt a configuration giving the maximum flux linking stator poles and rotor poles. In the motor 10, this force pulls the rotor poles into line with the stator poles to a position giving maximum flux linking the phase winding coils which are electrically excited at the time.

There is an interaction of two magnetic fluxes, one produced by the permanent magnet rotor poles 36 and the other produced by ampere turns in excited stator coils 30. In Figures 3A to 3C, these fluxes are identified as $\emptyset1$ for the stator coils 30 and $\emptyset2$ for the rotor magnets 36.

In the toroid motor 10, when one phase winding is excited, torque is produced at every pole by the same mechanism so that the total motor torque is the sum of the torques at each pole. In Figures 3A to 3C, the flux consequences of one rotor pole 36 moving past a stator coil 30 are considered, the procedure being repeated for each coil 30 of the same phase.

The rotor position shown in Figure 3A is the start location for a torque producing cycle. The stator pole is provided by the coil 30 represented by the solid circle coil in the stator slots 28. At the location of the permanent magnet north pole of permanent magnet 36 in Figure 3A, the north pole coil 30 is linked by a minimum flux with a maximum amount of permanent magnet flux opposing the flux produced by the coil 30.

As the rotor 20 moves towards the right, as seen in Figure 3A under the influence of the opposing forces of the magnetic fluxes described above, the flux linking the coil 30 changes from south to north in polarity. A uniform rate of change of this flux can be assumed since the gap-flux from the permanent magnets 36 is essentially uniformly distributed over the rotor pole faces and the movement of the rotor 20 is essentially at a uniform velocity.

Figure 3B shows a mid-position for the permanent magnet north pole as it moves across the pole enclosed by the coil 30 and Figure 3C shows the pole position when the flux linking the excited pole has reached its maximum value, which persists until the north pole reaches the position occupied by the south pole in Figure 3A. No torque is produced while the flux linking the coil is unchanging, either at maximum or minimum levels.

The current in the coil 30 now is reversed and the cycle is repeated, otherwise the period of decreasing flux linkage is accompanied by production of negative torque. The several phases of the stator coils 30 are excited in sequence as the rotor 20 moves as a result of the flux interactions described above to produce a series of torque pulses that approximate a continuous torque.

In summary of this disclosure, the present invention provides a dynamoelectric machine of novel construction wherein the magnitude of the pulsations of the air gap flux is decreased. Modifications are possible within the scope of this invention.

## Claims

1. A brushless D.C. dynamoelectric machine, which comprises a disc-like rotor element comprising hard ferrite toroid means providing a plurality of magnetic poles of alternating polarity and mounted for rotation about its axis, a disc-like stator element comprising soft ferrite toroid means and mounted coaxially with and spaced apart from the rotor element to define an air gap therebetween, said soft ferrite toroid means being formed with radially-directed coil winding-receiving slots, and electrical coil windings mounted to said stator in said slots,

characterized by means for decreasing the magnitude of pulsations of air gap flux during rotation of said rotor with respect to said stator.

2. The machine claimed in claim 1, characterized in that the decreasing means comprises providing said stator slots unevenly angularly spaced with respect to each other.

3. The machine claimed in claim 1, characterized in that the decreasing means comprises decreasing the cross-sectional dimension of said stator slots at the air gap face thereof.

4. The machine claimed in claim 3, characterized in that the stator slots are closed at the air gap face thereof.

5. The machine claimed in claim 1, characterized in that said decreasing means comprises providing rotor slots defined by a circumferential gap between toroidal segments slightly skewed with respect to the radial direction of the toroid.

6. The machine claimed in any one of claims 1 to 5, characterized in that said soft ferrite toroid means is formed as a unitary structure having slots therein receiving said electrical coil windings.

7. The machine claimed in any one of claims 1 to 5, characterized in that said soft toroid means is formed as a composite of a first toroid and a second toroid having the slots formed therein assembled to said first toroid.

8. The machine claimed in any one of claims 1 to 7, characterized in that said hard ferrite toroid means comprises an even-number of toroidal segments arranged in a multipolar magnetic circuit with each said toroidal segment constituting one pole to provide an axially-thin rotor, said soft ferrite toroid means comprises an even-number of toroidal segments each spaced apart by one of said slots and mounted on a support disc to provide an axially-thin stator spaced apart from said rotor by said air gap to permit said rotor to turn relative to said stator about a common axis, and an even number of said electrical coils is mounted in said slots with each said coil enclosing two of said toroidal segments and the number of soft ferrite toroidal segments being in number equal to twice the number of hard ferrite toroidal segments, whereby said coil windings substantially span one rotor pole pitch.

9. The machine claimed in claim 8, characterized in that hard ferrite toroidal segments are discrete segments mounted on a disc of magnetizable material.

FIG.1.

FIG.2.

36  20  32

Ø1  Ø1

N  Ø2  S  Ø2

28  26  30

10  18

FIG. 3A.

FIG. 3B.

N  S

FIG. 3C.

N  S

0 266 862

FIG. 4

18'

β

θ

θ

α

θ

α

θ

28'

β

θ

α

θ

α

18

FIG. A.

28

18A

FIG. B.

18B

FIG. C.

18'

FIG. D.

FIG. E.

18'

FIG. F.

18"

FIG. G.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 164 827 (MAGHEMITE INC.) * page 12, line 14 - page 16, line 5; figures 1-5 * | 1 | H 02 K 1/16 H 02 K 1/26 H 02 K 29/00 |
| A | | 6-9 | |
| Y | PATENT ABSTRACTS OF JAPAN, vol. 9, no. 291 (E-359)[2014], 19th November 1985; & JP - A - 60 131 061 (TOSHIBA K.K.) 12-07-1985 * abstract, figure * | 1 | |
| A | * idem * | 5 | |
| A | PATENT ABSTRACTS OF JAPAN, vol. 10, no. 197 (E-418)[2253], 10th July 1986; & JP - A - 61 42256 (MATSUSHITA ELECTRIC IND. CO LTD) 28-02-1986 * abstract, figure * | 3 | |
| A | PATENT ABSTRACTS OF JAPAN, vol. 8, no. 119 (E-248)[1556], 5th June 1984; & JP - A - 59 32346 (SEKOH GIKEN K.K.) 21-02-1984 * abstract, figure * | 1 | **TECHNICAL FIELDS SEARCHED (Int. Cl.4)** H 02 K 5/00 H 02 K 21/00 |
| A | FR-A-2 417 200 (S.A. AUTOMOBILES CITROEN) * page 1, line 23 - page 2, line 2; figures 2, 3 * | 3,4 | H 02 K 1/00 H 02 K 29/00 H 02 K 23/00 |

The present search report has been drawn up for all claims

| Place of search | Date of completion of the search | Examiner |
|---|---|---|
| BERLIN | 16-11-1987 | LEOUFFRE M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)